# EUROPEAN PATENT SPECIFICATION

(11) **EP 4 617 023 B1**
(45) Date of publication and mention of the grant of the patent: **22.07.2026**
(21) Application number: 25152974.9
(22) Date of filing: 21.01.2025
(51) Int. Cl.: B27B 17/08

(54) **CHAINSAW**
KETTENSÄGE
SCIE À CHAÎNE

(30) Priority: 12.03.2024 CN 202410281974
(43) Date of publication of application: 17.09.2025
(73) Proprietor: Nanjing Chervon Industry Co., Ltd., Nanjing, Jiangsu 211106 (CN)
(72) Inventor: LI, Yang, Nanjing, Jiangsu 211106, (CN); XU, Qian, Nanjing, Jiangsu 211106, (CN); WANG, Han, Nanjing, Jiangsu 211106, (CN)
(74) Representative: Sun, Yiming

(56) References cited:
- US-A1- 2023 208 252
- US-A1- 2023 318 376

## Description

### TECHNICAL FIELD

The present application relates to the technical field of power tools and, in particular, to a chainsaw.

### BACKGROUND

A chainsaw is a common handheld garden tool widely used with the increase in private and public greening areas. Currently, most chainsaws use electricity as a power source. A motor inside a chainsaw may drive a chain to rotate around a guide plate and then cause interlaced L-shaped blades on the chain to cut wood or branches. To meet the increasing use demands of users, it is necessary to arrange components inside the chainsaw reasonably so that the output performance of the chainsaw is improved and the structural compactness of the chainsaw is also considered.

This part provides background information related to the present application, and the background information is not necessarily the existing art.

Document US 2023/208252 A1 discloses a chainsaw according to the preamble of claim 1.

### SUMMARY

An object of the present application is to solve or at least alleviate part or all of the preceding problems. Therefore, an object of the present application is to provide a chainsaw.

To achieve the preceding object, the present invention provides a chainsaw according to claim 1.

The chainsaw includes: a housing; a chain and a guide plate, where the chain is disposed around the periphery of the guide plate, one end of the guide plate is supported on the housing, and the other end of the guide plate extends out of the housing along the lengthwise direction of the housing; a motor configured to drive the chain to cut; and a position detection assembly configured to detect a position of a rotor of the motor. The position detection assembly includes a magnetic member and a position sensor. The magnetic member is disposed on an end portion of an output shaft of the motor, the housing has an air guide portion configured to guide a heat dissipation airflow, and the position sensor is disposed on the air guide portion.

In some examples, a mounting member capable of being mounted with the magnetic member is disposed on the end portion of the output shaft, and the magnetic member is connected to the end portion of the output shaft through the mounting member.

In some examples, the mounting member is sleeved on an end of the output shaft away from the chain and the guide plate and has a mounting slot into which the magnetic member is capable of being embedded.

In some examples, the chainsaw further includes a fan disposed on the output shaft, where the fan is located between the magnetic member and the motor and the magnetic member is located between the position sensor and the fan along the axial direction of the output shaft.

In some examples, a projection of the magnetic member and a projection of the position sensor in the axial direction of the output shaft at least partially overlap.

In some examples, the straight line in which the output shaft is located is substantially perpendicular to the plane where the guide plate is located.

In some examples, the housing includes an air guide cover, and the air guide portion is located on the air guide cover.

In some examples, the air guide cover is formed with a slot away from the motor, the position sensor is disposed in the slot, and the slot has an opening through which a circuit cable and the heat dissipation airflow are capable of passing.

In some examples, the end of the output shaft mounted with the magnetic member at least partially extends into the slot.

In some examples, the chainsaw further includes a circuit board assembly and an oiler, where an orthographic projection of the motor and an orthographic projection of the oiler in a plane perpendicular to the guide plate are substantially within an orthographic projection of the circuit board assembly in the plane perpendicular to the guide plate.

In some examples, output power of the chainsaw is greater than or equal to 1000 W.

In some examples, a chain speed of the chainsaw is higher than or equal to 10 m/s.

In some examples, a power density of the motor is greater than 1000 W/kg.

In some examples, the outer diameter of the motor is larger than or equal to 50 mm.

In some examples, the motor includes a stator and the rotor that rotates relative to the stator, where a support member including a rim portion and a spoke portion is disposed at the radial center of the stator.

In an embodiment a chainsaw includes: a housing; a chain and a guide plate, where the chain is disposed around the periphery of the guide plate, one end of the guide plate is supported on the housing, and the other end of the guide plate extends out of the housing along the lengthwise direction of the housing; a motor configured to drive the chain to cut; and a position detection assembly configured to detect a position of a rotor of the motor. The position detection assembly includes a magnetic member and a position sensor. A mounting member capable of being mounted with the magnetic member is disposed on an end portion of an output shaft of the motor, and the magnetic member is connected to the end portion of the output shaft through the mounting member.

In an embodiment a chainsaw includes: a housing; a chain and a guide plate, where the chain is disposed around the periphery of the guide plate, one end of the guide plate is supported on the housing, and the other end of the guide plate extends out of the housing along the lengthwise direction of the housing; a motor configured to drive the chain to cut; and a position detection assembly configured to detect a position of a rotor of the motor. The position detection assembly includes a magnetic member and a position sensor. The housing has an air guide cover configured to guide a heat dissipation airflow, and the position sensor is disposed on the air guide cover.

In an embodiment a power tool includes: a motor configured to supply power to the power tool, where the motor includes a stator and a rotor that rotates relative to the stator; a power supply device electrically connected to at least the motor; and an output portion driven by the motor. A support member including a rim portion and a spoke portion is disposed at the radial center of the stator.

In some examples, the power tool further includes a housing formed with an accommodating space, the output portion includes a functional member, and the motor is disposed in the accommodating space of the housing and drives the functional member to perform a corresponding function.

In some examples, the rotor is sleeved outside the stator, and the support member is disposed in the stator and supports the stator.

In some examples, the support member is made of metal or modified plastic.

In some examples, the ratio of the outer diameter of the stator to the outer diameter of the rotor is higher than or equal to 0.7.

In some examples, the pole-arc coefficient of the rotor is greater than or equal to 0.6 and less than 1.

In some examples, a power density of the motor is greater than or equal to 2000 W/kg.

In some examples, the stator includes a stator core and stator windings, where the stator core has multiple radially extending teeth, each of the stator windings is wound around a respective one of the teeth, the width of each of the teeth is not constant in a radial direction, and the width of each of the teeth refers to the width of each of the teeth in a direction perpendicular to the extension direction of each of the teeth.

In some examples, the ratio of the maximum width of each of the teeth to the minimum width of each of the teeth is higher than 1 and lower than or equal to 1.8.

In some examples, the rotor includes a rotor core and magnetic steel, where the magnetic steel is fixed to the rotor core through overmolding.

In some examples, the motor further includes a bracket, the stator and the rotor are sleeved on the bracket, the support member is coaxially disposed with the bracket, and the support member is formed with an air inlet and an air outlet through which a heat dissipation airflow can pass.

In some examples, the power tool further includes a fan, the motor also has a motor housing, and the motor housing is integrally formed with the fan.

In some examples, the rotor includes the rotor core, and the inner wall of the motor housing is formed with a limit boss that limits the rotor core axially.

### BRIEF DESCRIPTION OF DRAWINGS

FIG. 1 is a plan view of a chainsaw as an example of the present application;
FIG. 2 is a plan view of the chainsaw shown in FIG. 1 with part of a housing removed;
FIG. 3 is a plan view of a circuit board assembly, an oiler, and a motor in the chainsaw shown in FIG. 1;
FIG. 4 is a sectional view of part of the structure of a housing, an air guide cover, a motor, and a fan in the chainsaw shown in FIG. 2;
FIG. 5 is a sectional view of a motor, a position detection assembly, and an air guide cover in the chainsaw shown in FIG. 1;
FIG. 6 is a perspective view of the motor and a magnetic member in the chainsaw shown in FIG. 5;
FIG. 7 is a plan view of the air guide cover and a position sensor in the chainsaw shown in FIG. 5;
FIG. 8 is an exploded view of the motor, a mounting member, a magnetic member, a position sensor, and the air guide cover in the chainsaw shown in FIG. 5;
FIG. 9 is a perspective view of a power tool as an example of the present application;
FIG. 10 is an exploded view of a motor in the power tool shown in FIG. 9;
FIG. 11 is a plan view of a stator, a rotor, and a motor housing in the motor of the power tool shown in FIG. 10;
FIG. 12 is a cross-sectional view of a rotor core, magnetic steel of a rotor, and a plastic member in the motor of the power tool shown in FIG. 10;
FIG. 13 is a sectional view of a motor housing, a fan, and a limit boss in the motor of the power tool shown in FIG. 10;
FIG. 14 is a plan view of a stator core and stator windings in the motor of the power tool shown in FIG. 10;
FIG. 15 is a plan view of a rotor, a stator, a support member, and an output shaft in the motor of the power tool shown in FIG. 10;
FIG. 16 is a perspective view of a support member and a bracket in the motor of the power tool shown in FIG. 10 in an example;
FIG. 17 is a sectional view of a base, a tubular member, the support member, and a stator core in the motor of the power tool shown in FIG. 16;
FIG. 18 is a perspective view of a bracket in the motor of the power tool shown in FIG. 10 in another example; and
FIG. 19 is a sectional view of a base, a tubular member, and an output shaft in the motor of the power tool shown in FIG. 18.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

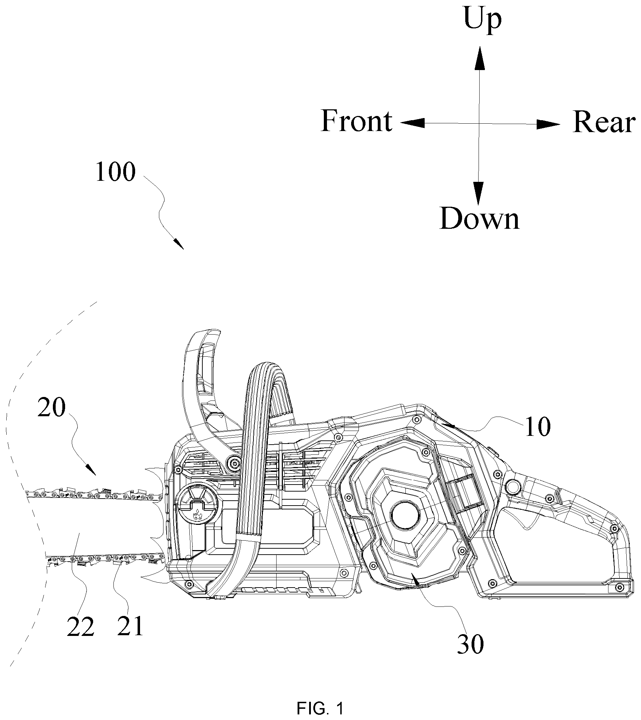

Refer to FIGS. 1 to 8, a chainsaw 100 as an example in the present application is shown. In addition, the directions such as front, rear, left, right, up, and down in the present application are defined in the figures. The chainsaw 100 may include a tool body and a power supply device 30. The power supply device 30 is configured to supply energy to the tool body. In some examples, the power supply device 30 may be a battery pack detachably connected to the tool body of the chainsaw 100.

The tool body of the chainsaw 100 includes a housing 10, a chain 21, and a guide plate 22. The housing 10 is the body of the chainsaw 100. An accommodating space is formed in the housing 10. The housing 10 can serve to support and accommodate various components described below. The chain 21 is a functional member 20 that actually cuts when the chainsaw 100 is in operation. The guide plate 22 supports and guides the chain 21. One end of the guide plate 22 is supported on the housing 10, and the other end of the guide plate 22 extends forwards out of the housing 10 along the lengthwise direction of the housing 10, that is, a front and rear direction.

In addition to the housing 10, the chain 21, and the guide plate 22, the chainsaw 100 further includes a motor 200 and a position detection assembly 240. The motor 200 is a prime mover of the chainsaw 100 and may be disposed in the accommodating space formed in the housing 10. The motor 200 converts electrical energy supplied by the power supply device 30 into mechanical energy that causes an output shaft 226 of the motor 200 to rotate. Then, the chain 21 is driven directly or indirectly through a transmission assembly to cut around the guide plate 22. The motor 200 includes a stator 210 and a rotor 220 that rotates relative to the stator 210. In the present application, the motor 200 adopted by the chainsaw 100 is a sensored motor. Additionally, in the chainsaw 100, the position detection assembly 240 is also configured to detect a position of the rotor 220 of the motor 200. Specifically, the chainsaw 100 further includes a controller and a driver circuit. The controller can control the operation of the motor 200. The controller receives data about the position of the rotor of the motor 200 detected by the position detection assembly 240. The controller invokes a relevant control program and outputs a control signal to the driver circuit based on the preceding data so that the driver circuit adjusts a drive signal to change a magnetic field of the stator 210. Thus, the rotor 220 and the output shaft 226 of the motor 200 are driven to operate in a desired manner.

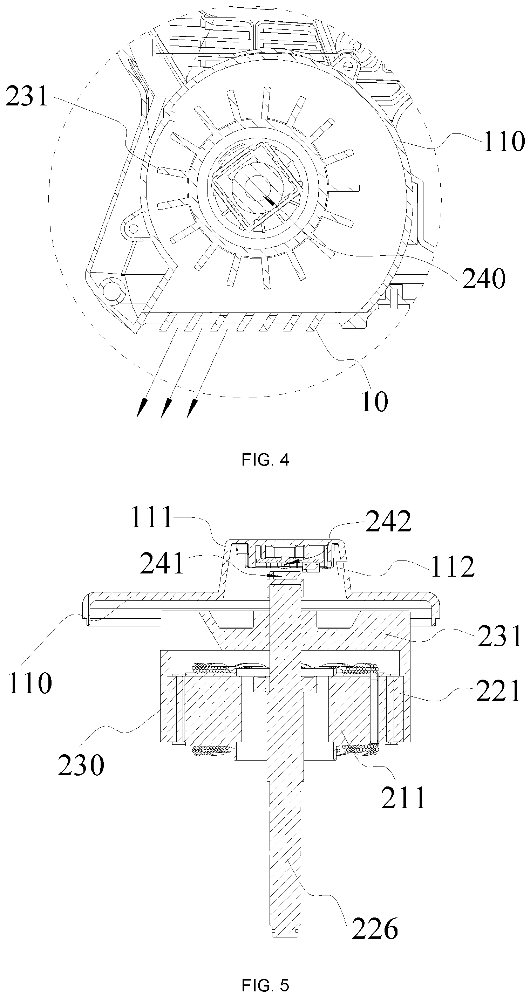

In the present application, as shown in FIGS. 4 to 8, the position detection assembly 240 of the chainsaw 100 includes a magnetic member 241 and a position sensor 242. The position of the rotor 220 may be sensed through an electromagnetic induction phenomenon between the magnetic member 241 and the position sensor 242. The magnetic member 241 is disposed on an end portion 226a of the output shaft 226 of the motor 200. The position sensor 242 is disposed on an air guide portion 110 of the housing 10, where the air guide portion 110 is configured to guide a heat dissipation airflow. Specifically, the magnetic member 241 may be a magnet or the like, and the position sensor 242 may be a magnetic encoder, a Hall sensor, or the like. A Hall element is disposed in the magnetic encoder, the Hall sensor, or the like described above. The position sensor 242 may sense the magnitude and direction of the magnetic field of the rotor 220 through a Hall effect between the Hall element and the magnet to determine a current position of the rotor 220 of the motor 200. In the chainsaw 100, the air guide portion 110 of the housing 10 is generally adjacent to the motor 200. The magnetic member 241 and the position sensor 242 are deployed at the preceding positions so that the original mounting space in the chainsaw 100 can be effectively used. In addition, a relative positional relationship between the magnetic member 241 and the position sensor 242 required by the magnetic member 241 and the position sensor 242 to cooperate with each other and operate normally can be established. Moreover, the position sensor 242 on the air guide portion 110 can implement effective heat dissipation. Thus, all of the design requirements about a compact structure, high power, and a high chain speed of the chainsaw 100 can be considered.

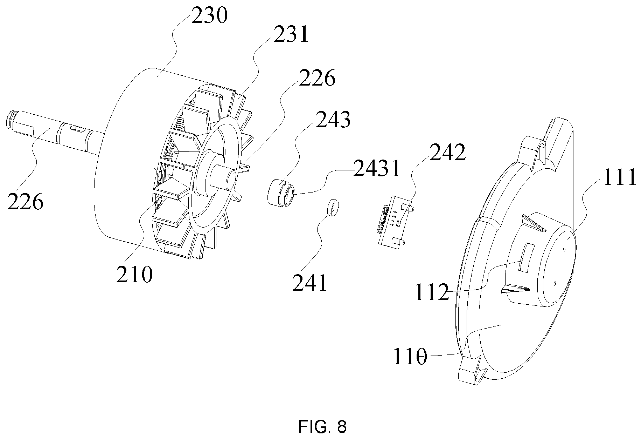

In some examples, the preceding magnetic member 241 is fixed to the end of the output shaft 226 of the motor 200 away from the guide plate 22 and the chain 21 described above. That is, the magnetic member 241 is fixed to a non-output end. A mounting member 243 capable of being mounted with the magnetic member 241 is disposed at this end. The magnetic member 241 is connected to the output shaft 226 of the motor 200 through the mounting member 243. In some examples, as shown in FIG. 8, the mounting member 243 is sleeved on the non-output end of the output shaft 226 of the motor 200 and has a mounting slot 2431 into which the magnetic member 241 can be embedded. Specifically, a section of the mounting member 243 along the radial direction of the output shaft 226 may be "H"-shaped. In some examples, the magnetic member 241 may be disc-shaped.

In some examples, the chainsaw 100 further includes a fan 231 mounted on the output shaft 226 of the motor 200. Along the axial direction of the output shaft 226, the fan 231 is located between the magnetic member 241 and the motor 200, and the magnetic member 241 is located between the air guide portion 110 and/or the position sensor 242 and the fan 231. In other words, as shown in FIGS. 5 to 8, along the axial direction of the output shaft 226 of the motor 200, the air guide portion 110 of the housing 10, the position sensor 242, the magnetic member 241, the fan 231, the stator 210 of the motor 200, and the rotor 220 of the motor 200 are sequentially disposed from the non-output end to the output end.

In some examples, as shown in FIGS. 4 to 8, the housing 10 of the chainsaw 100 includes an air guide cover 110, and the air guide portion 110 is located on the air guide cover 110. In some examples, the housing 10 of the chainsaw 100 includes an outer housing and an inner housing. The air guide cover 110, as part of the inner housing, can support and accommodate the motor 200. In addition, the air guide cover 110 can cooperate with an air outlet on the outer housing to guide the heat dissipation airflow flowing through the motor 200 out of the housing 10. In other examples, the air guide cover 110 may be part of the outer housing and has an air outlet through which the heat dissipation airflow can be expelled.

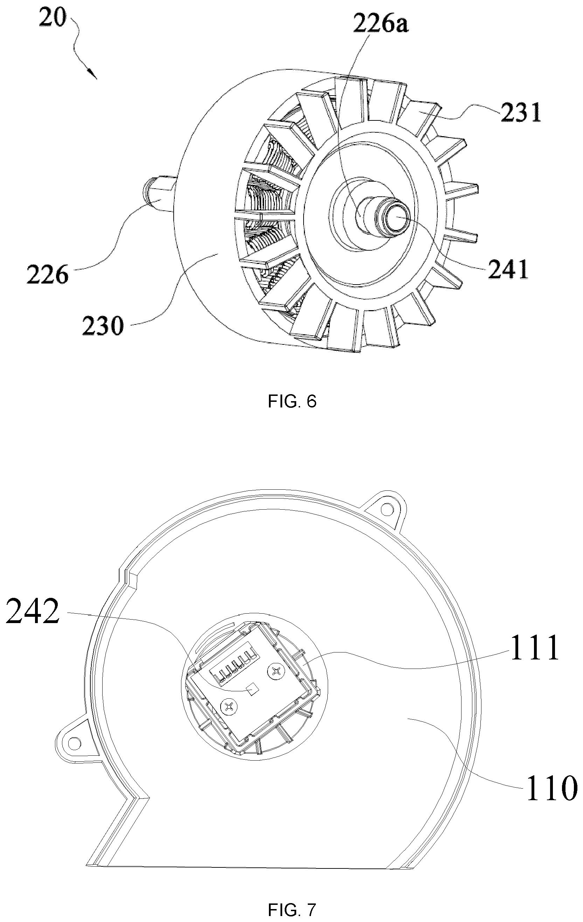

In some examples, as shown in FIGS. 5 and 7, the preceding air guide cover 110 has a slot 111 away from the motor 200, and the position sensor 242 is disposed in the slot 111. Specifically, the bottom of the slot 111 may be used as a mounting surface for the position sensor 242 so that the position sensor 242 is connected to the bottom of the slot 111 through a screw or the like. In some examples, an opening 112 through which a circuit cable and the heat dissipation airflow can pass is provided in the slot 111 so that the data from the position sensor 242 is outputted and heat can be better dissipated.

In some examples, the end of the output shaft 226 of the motor 200 mounted with the preceding magnetic member 241 at least partially extends into the slot 111 so that it is ensured that the position sensor 242 can accurately and effectively detect the position of the rotor of the motor 200 by sensing the magnetic member 241.

In some examples, as shown in FIGS. 4 and 8, a projection of the preceding magnetic member 241 and a projection of the position sensor 242 in the axial direction of the output shaft 226 of the motor 200 at least partially overlap. In some examples, the preceding position sensor 242 may be the magnetic encoder. One magnetic encoder may be provided and is located near a position facing the radial center of the motor 200. In other examples, the preceding position sensor 242 may be a linear Hall sensor. Two or three linear Hall sensors may be provided and disposed circumferentially and configured to face the output shaft 226 of the motor 200.

In some examples, the preceding motor 200 and the output shaft 226 thereof extend along the transverse direction of the housing 10, that is, a left and right direction. The straight line in which the output shaft 226 is located is substantially perpendicular to the plane where the guide plate 22 is located. Following on from the preceding description, in some examples, the plane where the preceding disc-shaped magnetic member 241 is located is substantially parallel to the plane where the guide plate 22 is located. In some examples, the body of the preceding slot 111 extends along the left and right direction. In some examples, the preceding bottom of the slot used as the mounting surface, the plane where the preceding position sensor 242 is located, or the plane where the multiple position sensors 242 are collectively located may be substantially parallel to the plane where the guide plate 22 is located.

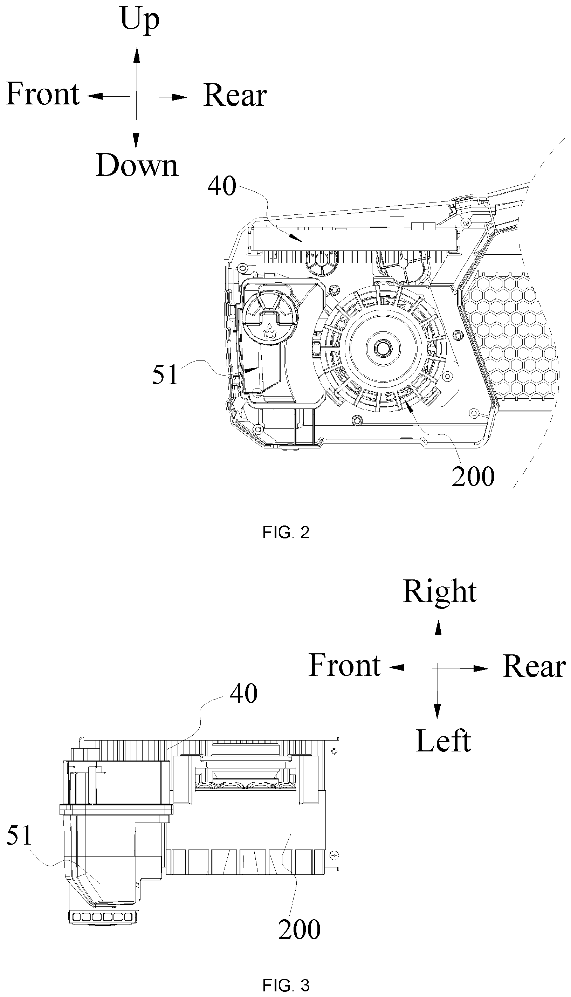

In some examples, as shown FIGS. 2 and 3, the chainsaw 100 further includes a circuit board assembly 40 and an oiler 51. An orthographic projection of the motor 200 and an orthographic projection of the oiler 51 in a plane perpendicular to the guide plate 22 are substantially within an orthographic projection of the circuit board assembly 40 in the plane perpendicular to the guide plate 22. That is, the projection of the motor 200 and the projection of the oiler 51 in an up and down direction are substantially within the projection of the circuit board assembly 40 in the up and down direction. Thus, the internal space of the housing of the chainsaw 100 is fully used, and the space for the combination of the three components is reduced. In some examples, the circuit board assembly 40 is located above the motor 200 and the oiler 51. In some examples, the motor 200 and the oiler 51 are arranged along the front and rear direction.

In addition, following on from the preceding description, the chainsaw 100 in the present application has the characteristics of being compact and high-power. In some examples, output power of the chainsaw 100 is greater than or equal to 1000 W. Preferably, in some examples, the output power of the chainsaw 100 is greater than or equal to 3000 W. Preferably, in some examples, the output power of the chainsaw 100 is greater than or equal to 5000 W. The output power of the power tool may be calculated based on an average operating current of the power tool and the power supply device 30 such as the battery pack. The average operating current of the power tool generally varies within a certain numerical range. Correspondingly, the output power of the power tool may vary within a numerical range. In some examples, the maximum output power of the chainsaw 100 is greater than or equal to 5000 W.

In some examples, a chain speed of the chainsaw 100 is higher than or equal to 10 m/s. Preferably, in some examples, the chain speed of the chainsaw 100 is higher than or equal to 20 m/s. Preferably, in some examples, the chain speed of the chainsaw 100 is higher than or equal to 40 m/s. The chain speed of the chainsaw 100 may refer to the speed at which the teeth of the chain 21 pass through a cut member when the chainsaw 100 is in operation.

In some examples, a power density of the motor 200 of the chainsaw 100 is greater than or equal to 1000 W/kg. Preferably, in some examples, the power density of the motor 200 of the chainsaw 100 is greater than or equal to 2000 W/kg. Preferably, in some examples, the power density of the motor 200 of the chainsaw 100 is greater than or equal to 3000 W/kg. The power density of the motor 200 may refer to the ratio of the rated power of the motor 200 to the mass of the essential components of the motor 200.

In some examples, the outer diameter of the motor 200 of the chainsaw 100 is larger than or equal to 50 mm. Preferably, in some examples, the outer diameter of the motor 200 of the chainsaw 100 is larger than or equal to 70 mm.

One of the benefits of the present application is that the related assembly in the chainsaw configured to detect the position of the rotor of the motor can be reasonably deployed at the specific position. The specific position deployment of the magnetic member and the position sensor can meet the performance requirements about driving and controlling a chainsaw with high power and a high chain speed. In addition, the internal space of the housing of the chainsaw can be reasonably and effectively used, thereby considering both compactness and a hand feel.

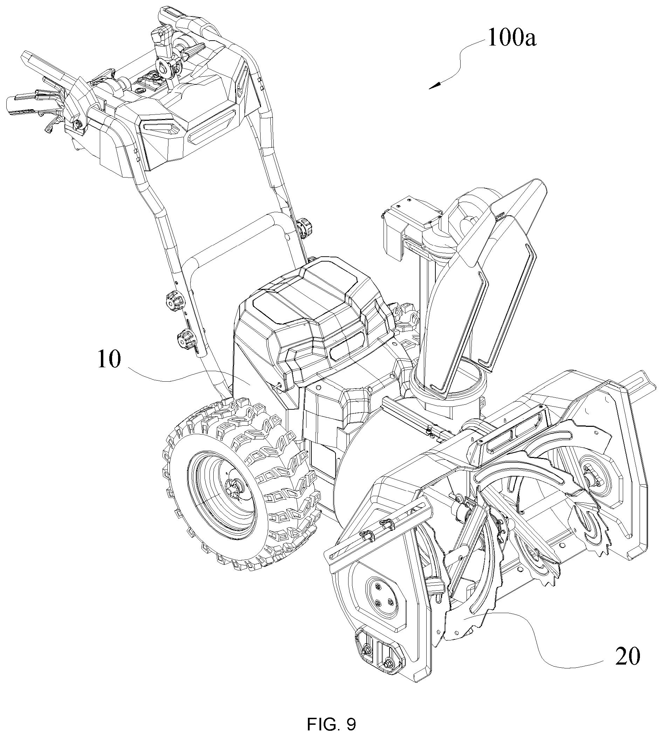

Following on from the preceding description, the motor 200 used in the chainsaw 100 in the present application is also applicable to other types of power tools so that the power tools have better output and heat dissipation performance. Refer to FIGS. 1 and 9, power tools as several examples in the present application are shown. It is to be understood that the chainsaw 100 shown in FIG. 1 and a snow thrower 100a shown in FIG. 9 do not specifically limit the technical solutions of the power tools and the motors thereof described below. The following power tools include handheld tools such as chainsaws, circular saws, and electric drills, table tools such as miter saws and table saws, and outdoor power equipment such as snow throwers and mowers.

As shown in FIGS. 1 and 9, each of the power tools includes a housing 10, an output portion 20, a motor 200, and a power supply device 30. Similar to the preceding description, the housing 10 is formed with an accommodating space, and the motor 200 is accommodated in the accommodating space of the housing 10. The housing 10 is generally also formed with a coupling portion for the power supply device 30 such as a battery pack to be mounted to each of the power tools and supply power to each of the power tools. The output portion 20 is driven by the motor 200 to perform a corresponding tool function such as cutting, grinding, or fastening. The output portion 20 includes a functional member 20 that actually performs the preceding function. For example, the functional member 20 may be a saw blade, a chain, a drill bit, and the like and may be driven directly or indirectly through a transmission assembly by an output shaft 226 of the motor 200.

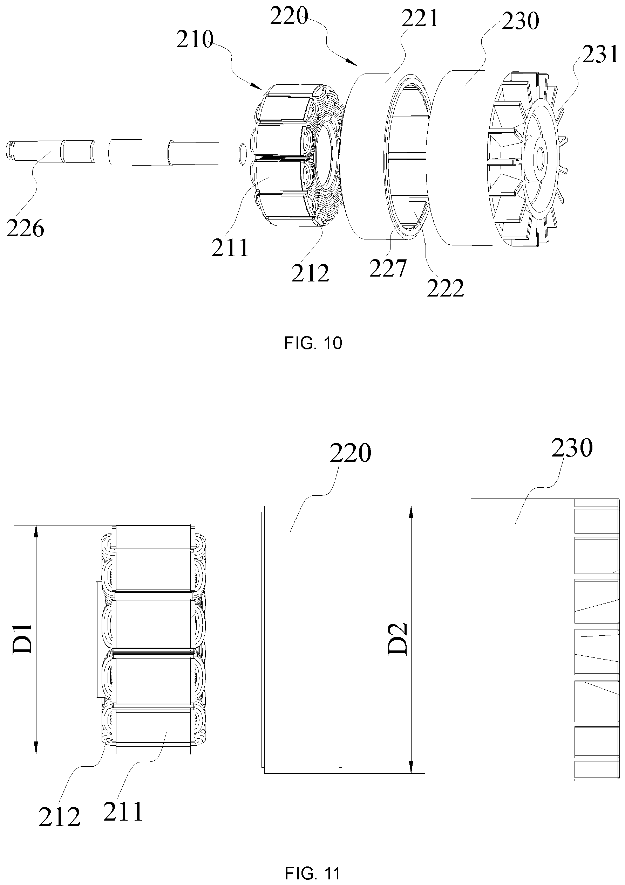

Referring to FIGS. 10 to 19, the motor 200, that is, an electric motor, includes a stator 210 and a rotor 220 that rotates around the stator 210. The stator 210 and the rotor 220 are nested with each other. In the case where the electric motor is an outrunner, the stator 210 is disposed inside radially while the rotor 220 is at least partially disposed on the outer side of the stator 210 and rotates relative to the stator 210. In the case where the electric motor is an inrunner, the stator 210 is disposed outside radially while the rotor 220 is at least partially disposed on the inner side of the stator 210 and rotates relative to the stator 210. In some examples, the electric motor is a brushless motor. In some examples, the electric motor is a permanent-magnet synchronous motor. A permanent-magnet synchronous motor with an outer rotor is mainly described below. The rotor 220 includes a rotor core 221 and magnetic steel 222 fixed to the rotor core 221. The stator 210 includes a stator core 211 and stator windings 212 wound around the stator core 211. The preceding rotor core 221 and magnetic steel 222 of the rotor 220 are sleeved outside the preceding stator core 211 and stator windings 212 of the stator 210.

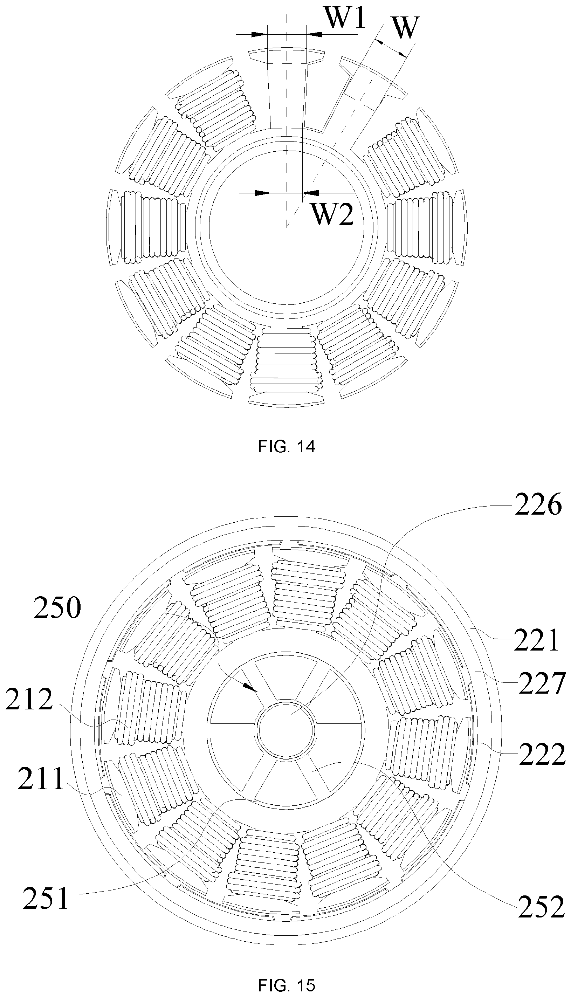

In the present application, a support member 250 with a rim and spoke structure is added in the motor 200 of each of the power tools. As shown in FIG. 15, the preceding support member 250 is disposed at the radial center of the stator 210. The support member 250 includes a rim portion 251 and a spoke portion 252. The rim portion 251 forms the outer edge of the support member 250, and the spoke portion 252 in the rim portion 251 is connected to the rim portion 251 and formed with a through hole through which the output shaft 226 can pass. In some examples, the preceding permanent-magnet synchronous motor with the outer rotor is used as an example. The support member 250 can support the stator 210 on the periphery of the support member 250. The rim portion 251 supports the stator core 211. The spoke portion 252 includes multiple spokes extending radially inwards from the rim portion 251. The multiple spokes do not intersect with each other and form the through hole through which the output shaft 226 can pass at the radial center of the stator 210. In some examples, the rim portion 251 includes an inner rim and an outer rim. The outer rim supports the stator core 211. The inner rim forms the through hole for the output shaft 226 to pass through. The multiple spokes of the spoke portion 252 are connected between the inner and outer rims described above. The support member 250 provides a large hollow space for the stator 210 and rotor 220 of the motor 200 through the rim and spoke structure. Compared with a common bearing support solution, this design significantly improves the heat dissipation performance. Additionally, the weight and cost of the motor 200 can be reduced.

In some examples, the preceding support member is made of metal or modified plastic. The used metal or modified plastic has the characteristics of having a light weight and excellent heat dissipation performance so that the improvement described above can be better achieved and technological implementation is facilitated. In some examples, the preceding support member is made of aluminum. In other examples, the preceding support member is made of thermoplastic or thermosetting plastic.

In some examples, the motor 200 is a sensored motor that uses a position sensor to detect the position of the rotor 220. For example, the position sensor such as a magnetic encoder may be mounted near the end portion 226a of the output shaft 226 of the motor 200, as illustrated above. Alternatively, the position sensor such as a Hall sensor may be mounted near a tooth or slot of the stator core 211 of the stator 210 of the motor 200.

In some examples, the power density of the motor 200 is greater than or equal to 2000 W/kg. Preferably, in some examples, the power density of the motor 200 is greater than or equal to 3000 W/kg. The power density of the motor 200 may refer to the ratio of the rated power of the motor 200 to the mass of the essential components of the motor 200. In some examples, the rated power of the motor 200 is greater than or equal to 3000 W and less than or equal to 7000 W. In other examples, the idle speed of the motor 200 is higher than or equal to 10000 rpm and lower than or equal to 17000 rpm. In other examples, the outer diameter of the motor 200 is larger than or equal to 50 mm. Preferably, in some examples, the outer diameter of the motor 200 is larger than or equal to 50 mm and smaller than or equal to 105 mm. Preferably, in some examples, the outer diameter of the motor 200 is larger than or equal to 80 mm and smaller than or equal to 95 mm.

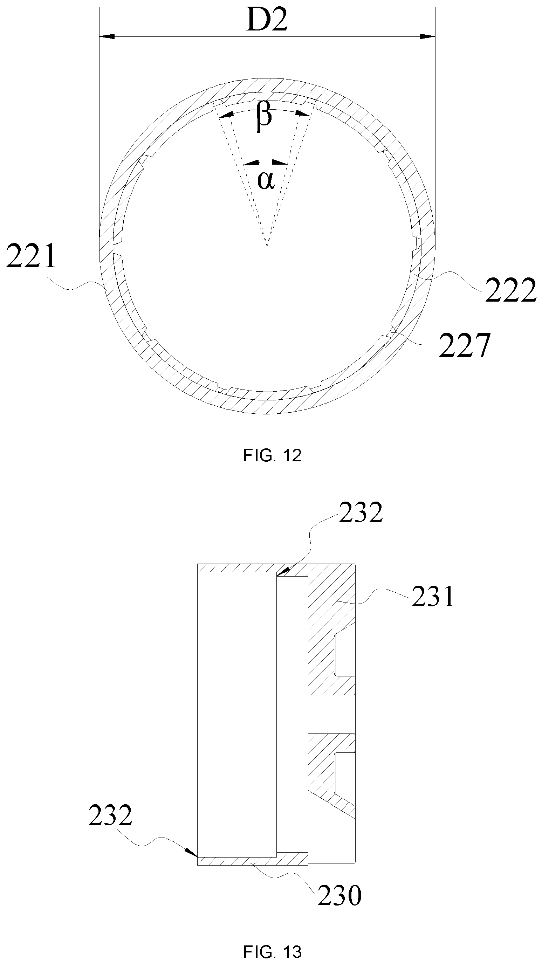

In some examples, the motor 200 is the outrunner. The ratio of the outer diameter D1 of the stator 210 of the motor 200 to the outer diameter D2 of the rotor 220 of the motor 200 is higher than or equal to 0.7 and lower than 1. As shown in FIGS. 11 and 12, the outer diameter D1 of the stator 210 of the motor 200 may refer to the outer diameter of a stator core 211 of the motor 200, and the outer diameter D2 of the rotor 220 of the motor 200 may refer to the outer diameter of a rotor core 221. Preferably, in some examples, the ratio of the outer diameter D1 of the stator 210 of the motor 200 to the outer diameter D2 of the rotor 220 of the motor 200 is higher than or equal to 0.8 and lower than 1 so that the stator 210 and the rotor 220 more compactly constitute the preceding motor 200. Thus, the dimension of the motor 200 is reduced.

In some examples, the pole-arc coefficient of the rotor 220 of the motor 200 is greater than or equal to 0.6 and less than 1. The pole-arc coefficient of the permanent-magnet synchronous motor may be defined through the arc length and pole pitch of the magnetic steel 222 of the rotor. As shown in FIG. 12, the pole-arc coefficient of the rotor 220 refers to the ratio of the arc length α of the magnetic steel 222 of the rotor to the corresponding pole pitch β of the magnetic steel 222 of the rotor. Preferably, in some examples, the pole-arc coefficient of the rotor 220 of the motor 200 is greater than or equal to 0.7 and less than 1.

In some examples, the magnetic steel 222 is fixed to the rotor core 221 through overmolding in the rotor 220. As shown in FIGS. 10, 12, and 15, a motor housing 230, the rotor core 221, and the magnetic steel 222 of the rotor are disposed coaxially. The rotor core 221 is fixed to the motor housing 230. The magnetic steel 222 of the rotor is fixed to the rotor core 221 through a plastic member 227 such as thermoplastic or thermosetting plastic during processing. Specifically, a projection of the magnetic steel 222 of the rotor along the axial direction of the motor 200 may be in the shape of an inverted trapezoid or another shape that makes it more difficult for the magnetic steel 222 to fall off from the plastic member 227. The lower base of the magnetic steel 222 in the shape of an inverted trapezoid may be closer to the rotor core 221 than the upper base of the magnetic steel 222. In some examples, the motor housing 230 is made of aluminum. The motor housing 230 is mounted with the rotor core 221 through shrink-fitting. In some examples, the inner wall of the motor housing 230 is further formed with a limit boss 232 that limits the rotor core 221 axially, thereby enhancing the fixing effect of the motor housing 230 on the rotor core 221.

In some examples, the motor 200 further includes the motor housing 230 and a fan 231 integrally formed with the motor housing 230. The fan 231 is disposed on the output shaft 226 of the motor 200 and is located in a plane perpendicular to the output shaft 226 of the motor 200. As shown in FIGS. 10 and 13, the fan 231 is integrally formed with the motor housing 230. The fan 231 is disposed on the output shaft 226 of the motor 200. The output shaft 226 of the motor 200 may be in an interference fit with the motor housing 230 to ensure a stable connection. Along the axial direction of the motor 200, the motor housing 230 is sequentially provided with the fan 231, the limit boss 232, and a housing body, from the non-output end to the output end. The rotor core 221 is supported and limited by the preceding limit boss 232 and is located in the housing body.

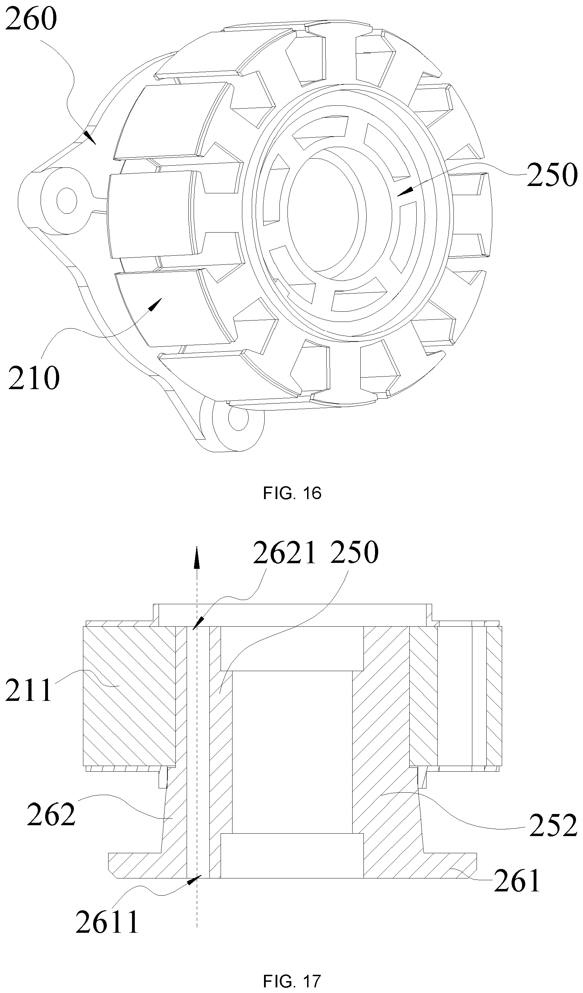

In some examples, the motor 200 further includes a bracket 260. The stator 210, the rotor 220, the output shaft 226, the support member 250, and the bracket 260 are coaxially disposed. The stator 210, the rotor 220, the output shaft 226, and the support member 250 may be sleeved on or inserted through the bracket 260. In this example, the bracket 260 is also formed with or cooperates with the preceding components to form an air inlet 2611 and an air outlet 2621 through which a heat dissipation airflow can pass. Specifically, as shown in FIGS. 16 to 19, the bracket 260 may include a base 261 and a tubular member 262. The base 261 is connected to or integrally formed with the tubular member 262. The plane where the base 261 is located is substantially perpendicular to the straight line in which the tubular member 262 is located. The base 261 is axially away from the fan 231. The stator 210, the rotor 220, the output shaft 226, and the support member 250 can be sleeved on or inserted through the tubular member 262. The base 261 of the bracket is provided with the air inlet 2611 extending radially or axially, and the tubular member 262 and the output shaft 226 or the support member 250 that is inserted through the tubular member 262 can form the air outlet 2621 extending axially. The heat dissipation airflow enters through the air inlet 2611, carries away the heat from the surfaces of the stator 210 and/or the support member 250 fitting snugly with the bracket 260, and then exits through the air outlet 2621.

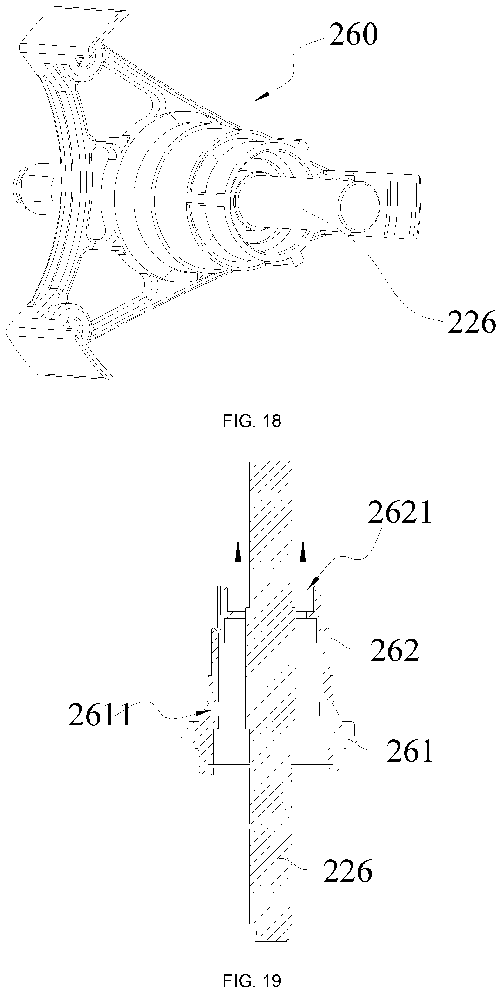

In some examples, the support member 250 is connected to or integrally formed with the bracket 260. As shown in FIGS. 16 and 17, the support member 250 with the rim and spoke structure is disposed in the tubular member 262 of the bracket 260. The output shaft 226 is inserted through the support member 250 while the stator 210 and the rotor 220 are sleeved outside the tubular member 262. The bracket 260 cooperates with the support member 250 to form an axially extending airflow channel so that the heat from the stator 210 fitting snugly with the periphery of the bracket 260 and the heat from the support member 250 in the airflow channel are effectively dissipated. In other examples, as shown in FIGS. 18 and 19, the air inlet 2611 extends radially in the base 261, the tubular member 262 cooperates with the output shaft 226 inserted through the tubular member 262 to form an airflow channel, the air outlet 2621 extends axially between the tubular member 262 and the output shaft 226, and the stator 210, the rotor 220, and the support member 250 can be sleeved outside the tubular member 262 of the bracket 260. In other examples, a projection of the support member 250 and a projection of the bracket 260 in the axial direction of the motor 200 may partially overlap, and/or a projection of the support member 250 and a projection of the bracket 260 in the radial direction of the motor 200 may either partially overlap or not overlap.

In some examples, the preceding stator core 211 is circumferentially provided with multiple radially extending teeth. Each of the preceding stator windings 212 is wound around a respective one of the teeth, and the width of each of the teeth of the stator core 211 is not constant in a radial direction. As shown in FIG. 14, the width W of each of the teeth of the stator core 211 refers to the width of each of the teeth in a direction perpendicular to the extension direction of each of the teeth. In some examples, for the preceding tooth with the width not constant in the radial direction, the ratio of the maximum width of the tooth to the minimum width of the tooth is higher than 1 and lower than or equal to 1.8. As shown in FIG. 14, for the stator core 211 of the motor 200, the top of the tooth has the maximum tooth width, that is, W1, and the bottom of the tooth has the minimum tooth width, that is, W2. The ratio of W1 to W2 is within a range of 1 to 1.8. The top of the tooth refers to the end of the tooth away from the yoke of the stator core, and the bottom of the tooth refers to the end of the tool close to the yoke of the stator core. Preferably, in some examples, the ratio of the maximum width of the tooth to the minimum width of the tooth is higher than 1 and lower than or equal to 1.5.

In some examples, the stator windings 212 wound on different teeth of the stator core 211 can have either an in-phase relationship or an out-of-phase relationship. A three-phase electric motor is used as an example. Several windings wound on several teeth may belong to an A phase of the motor while several windings on other several teeth may belong to a B phase of the motor. There may be various specific winding sequences and connection relationships. In this example, two stator windings 212 that belong to the same phase may have different numbers of turns. The number of turns of a stator winding 212 refers to the number of wires wound in parallel around a respective tooth. In some examples, the motor 200 is an electric motor with 10 poles and 12 slots. 10 pieces of magnetic steel 222 of the rotor are provided, and the stator core 211 has 12 teeth. It is to be understood that in other examples, the number of pieces of magnetic steel 222 of the rotor and the number of teeth of the stator 210 are adjustable according to actual scenarios.

The numerical values of the related parameters such as the ratio of the outer diameter of the stator 210 to the outer meter of the rotor 220, the pole-arc coefficient of the rotor 220, the tooth width of the stator core 211, and the number of turns of the stator winding 212 are set to ensure the accurate and efficient operation of the high-power motor 200. With these parameters, a slot fill factor can be increased, a harmonic distortion rate can be reduced, a torque fluctuation can be stabilized, and a motor noise can be reduced according to a simulation and an experiment.

The basic principles, main features, and advantages of this application are shown and described above. It is to be understood by those skilled in the art that the aforementioned examples do not limit the present invention and that various changes and modifications may be made therein within the scope of the invention as defined by the claims.

## Claims

1. A chainsaw (100), comprising:
a housing (10);
a chain (21) and a guide plate (22), wherein the chain is disposed around a periphery of the guide plate, one end of the guide plate is supported on the housing, and another end of the guide plate extends out of the housing along a lengthwise direction of the housing;
a motor (200) configured to drive the chain to cut; and
a position detection assembly (240) configured to detect a position of a rotor of the motor and comprising a magnetic member (241) and a position sensor (242);
wherein the magnetic member is disposed on an end portion (226a) of an output shaft (226) of the motor,
wherein the housing has an air guide portion (110) configured to guide a heat dissipation airflow,
**characterized in that** the position sensor (242) portion (110). is disposed on the air guide

2. The chainsaw according to claim 1, wherein a mounting member (243) capable of being mounted with the magnetic member is disposed on the end portion of the output shaft, and the magnetic member is connected to the end portion of the output shaft through the mounting member.

3. The chainsaw according to claim 2, wherein the mounting member is sleeved on the end portion of the output shaft away from the chain and the guide plate and has a mounting slot (2431) into which the magnetic member is capable of being embedded.

4. The chainsaw according to claim 1, further comprising:
a fan (231) disposed on the output shaft,
wherein the fan is located between the magnetic member and the motor and the magnetic member is located between the position sensor and the fan along an axial direction of the output shaft.

5. The chainsaw according to claim 1, wherein a projection of the magnetic member and a projection of the position sensor in an axial direction of the output shaft at least partially overlap.

6. The chainsaw according to claim 1, wherein a straight line in which the output shaft is located is substantially perpendicular to a plane where the guide plate is located.

7. The chainsaw according to claim 1, wherein the housing comprises an air guide cover (110), and the air guide portion is located on the air guide cover.

8. The chainsaw according to claim 7, wherein the air guide cover is formed with a slot (111) away from the motor, the position sensor is disposed in the slot, and the slot has an opening (112) through which a circuit cable and the heat dissipation airflow are capable of passing.

9. The chainsaw according to claim 8, wherein the end portion of the output shaft mounted with the magnetic member at least partially extends into the slot.

10. The chainsaw according to claim 1, further comprising:
a circuit board assembly (40) and an oiler (51), wherein an orthographic projection of the motor and an orthographic projection of the oiler in a plane perpendicular to the guide plate are substantially within an orthographic projection of the circuit board assembly in the plane perpendicular to the guide plate.

11. The chainsaw according to claim 1, wherein output power of the chainsaw is greater than or equal to 1000 W.

12. The chainsaw according to claim 1, wherein a chain speed of the chainsaw is higher than or equal to 10 m/s.

13. The chainsaw according to claim 1, wherein a power density of the motor is greater than 1000 W/kg.

14. The chainsaw according to claim 1, wherein an outer diameter of the motor is larger than or equal to 50 mm.

15. The chainsaw according to claim 1, wherein the motor comprises a stator (210) and a rotor (220) that rotates relative to the stator, wherein a support member (250) comprising a rim portion and a spoke portion is disposed at a radial center of the \stator.

## Patentansprüche

1. Eine Kettensäge (100), umfassend:
ein Gehäuse (10);
eine Kette (21) und eine Führungsplatte (22), wobei die Kette um einen Umfang der Führungsplatte herum angeordnet ist, ein Ende der Führungsplatte auf dem Gehäuse abgestützt ist und ein anderes Ende der Führungsplatte entlang einer Längsrichtung des Gehäuses aus dem Gehäuse herausragt;
einen Motor (200), der dazu ausgebildet ist, die Kette zum Schneiden anzutreiben;
und
eine Positionserfassungsanordnung (240), die dazu ausgebildet ist, eine Position eines Rotors des Motors zu erfassen und ein magnetisches Element (241) und einen Positionssensor (242) umfasst;
wobei das magnetische Element an einem Endabschnitt (226a) einer Abtriebswelle (226) des Motors angeordnet ist,
wobei das Gehäuse einen Luftleitabschnitt (110) aufweist, der dazu ausgebildet ist, einen Wärmeabfuhrluftstrom zu leiten,
**dadurch gekennzeichnet, dass** der Positionssensor (242) an dem Luftleitabschnitt (110) angeordnet ist.

2. Die Kettensäge nach Anspruch 1, wobei ein Montageelement (243), das dazu ausgebildet ist, mit dem magnetischen Element montiert zu werden, an dem Endabschnitt der Abtriebswelle angeordnet ist, und das magnetische Element über das Montageelement mit dem Endabschnitt der Abtriebswelle verbunden ist.

3. Die Kettensäge nach Anspruch 2, wobei das Montageelement auf den von der Kette und der Führungsplatte abgewandten Endabschnitt der Abtriebswelle aufgesteckt ist und einen Montageschlitz (2431) aufweist, in den das magnetische Element eingebettet werden kann.

4. Die Kettensäge nach Anspruch 1, ferner umfassend:
einen Ventilator (231), der auf der Abtriebswelle angeordnet ist,
wobei der Ventilator zwischen dem magnetischen Element und dem Motor angeordnet ist und das magnetische Element zwischen dem Positionssensor und dem Ventilator entlang einer Axialrichtung der Abtriebswelle angeordnet ist.

5. Die Kettensäge nach Anspruch 1, wobei sich eine Projektion des magnetischen Elements und eine Projektion des Positionssensors in einer Axialrichtung der Abtriebswelle zumindest teilweise überlappen.

6. Die Kettensäge nach Anspruch 1, wobei eine Gerade, in der die Abtriebswelle angeordnet ist, im Wesentlichen senkrecht zu einer Ebene ist, in der die Führungsplatte angeordnet ist.

7. Die Kettensäge nach Anspruch 1, wobei das Gehäuse eine Luftleitabdeckung (110) umfasst, und der Luftleitabschnitt an der Luftleitabdeckung angeordnet ist.

8. Die Kettensäge nach Anspruch 7, wobei die Luftleitabdeckung mit einem von dem Motor beabstandeten Schlitz (111) ausgebildet ist, der Positionssensor in dem Schlitz angeordnet ist und der Schlitz eine Öffnung (112) aufweist, durch die ein Schaltungskabel und der Wärmeabfuhrluftstrom hindurchtreten können.

9. Die Kettensäge nach Anspruch 8, wobei der mit dem magnetischen Element montierte Endabschnitt der Abtriebswelle zumindest teilweise in den Schlitz hineinragt.

10. Die Kettensäge nach Anspruch 1, ferner umfassend:
eine Leiterplattenanordnung (40) und einen Öler (51), wobei eine orthogonale Projektion des Motors und eine orthogonale Projektion des Ölers in einer zu der Führungsplatte senkrechten Ebene im Wesentlichen innerhalb einer orthogonalen Projektion der Leiterplattenanordnung in der zu der Führungsplatte senkrechten Ebene liegen.

11. Die Kettensäge nach Anspruch 1, wobei eine Ausgangsleistung der Kettensäge größer als oder gleich 1000 W ist.

12. Die Kettensäge nach Anspruch 1, wobei eine Kettengeschwindigkeit der Kettensäge höher als oder gleich 10 m/s ist.

13. Die Kettensäge nach Anspruch 1, wobei eine Leistungsdichte des Motors größer als 1000 W/kg ist.

14. Die Kettensäge nach Anspruch 1, wobei ein Außendurchmesser des Motors größer als oder gleich 50 mm ist.

15. Die Kettensäge nach Anspruch 1, wobei der Motor einen Stator (210) und einen relativ zu dem Stator rotierenden Rotor (220) umfasst, wobei ein Stützelement (250), das einen Felgenabschnitt und einen Speichenabschnitt umfasst, an einem radialen Zentrum des Stators angeordnet ist.

## Revendications

1. Une tronçonneuse (100), comprenant :
un boîtier (10) ;
une chaîne (21) et un guide-chaîne (22), dans lequel la chaîne est disposée autour d'une périphérie du guide-chaîne, une extrémité du guide-chaîne est supportée sur le boîtier, et une autre extrémité du guide-chaîne s'étend hors du boîtier suivant une direction longitudinale du boîtier ;
un moteur (200) configuré pour entraîner la chaîne afin de couper ; et
un ensemble de détection de position (240) configuré pour détecter une position d'un rotor du moteur et comprenant un élément magnétique (241) et un capteur de position (242) ;
dans lequel l'élément magnétique est disposé sur une portion d'extrémité (226a) d'un arbre de sortie (226) du moteur,
dans lequel le boîtier comporte une portion de guidage d'air (110) configurée pour guider un flux d'air de dissipation thermique,
**caractérisé en ce que** le capteur de position (242) est disposé sur la portion de guidage d'air (110).

2. La tronçonneuse selon la revendication 1, dans lequel un élément de montage (243), apte à être monté avec l'élément magnétique, est disposé sur la portion d'extrémité de l'arbre de sortie, et l'élément magnétique est relié à la portion d'extrémité de l'arbre de sortie par l'intermédiaire de l'élément de montage.

3. La tronçonneuse selon la revendication 2, dans lequel l'élément de montage est emmanché sur la portion d'extrémité de l'arbre de sortie éloignée de la chaîne et du guide-chaîne et comporte une fente de montage (2431) dans laquelle l'élément magnétique peut être encastré.

4. La tronçonneuse selon la revendication 1, comprenant en outre :
un ventilateur (231) disposé sur l'arbre de sortie,
dans lequel le ventilateur est situé entre l'élément magnétique et le moteur et l'élément magnétique est situé entre le capteur de position et le ventilateur suivant une direction axiale de l'arbre de sortie.

5. La tronçonneuse selon la revendication 1, dans lequel une projection de l'élément magnétique et une projection du capteur de position dans une direction axiale de l'arbre de sortie se recouvrent au moins partiellement.

6. La tronçonneuse selon la revendication 1, dans lequel une droite dans laquelle l'arbre de sortie est situé est sensiblement perpendiculaire à un plan dans lequel le guide-chaîne est situé.

7. La tronçonneuse selon la revendication 1, dans lequel le boîtier comprend un couvercle de guidage d'air (110), et la portion de guidage d'air est située sur le couvercle de guidage d'air.

8. La tronçonneuse selon la revendication 7, dans lequel le couvercle de guidage d'air est formé avec une fente (111) éloignée du moteur, le capteur de position est disposé dans la fente, et la fente comporte une ouverture (112) à travers laquelle un câble de circuit et le flux d'air de dissipation thermique peuvent passer.

9. La tronçonneuse selon la revendication 8, dans lequel la portion d'extrémité de l'arbre de sortie montée avec l'élément magnétique s'étend au moins partiellement dans la fente.

10. La tronçonneuse selon la revendication 1, comprenant en outre :
un ensemble de carte de circuit (40) et un huileur (51), dans lequel une projection orthogonale du moteur et une projection orthogonale de l'huileur dans un plan perpendiculaire au guide-chaîne sont sensiblement situées à l'intérieur d'une projection orthogonale de l'ensemble de carte de circuit dans le plan perpendiculaire au guide-chaîne.

11. La tronçonneuse selon la revendication 1, dans laquelle une puissance de sortie de la tronçonneuse est supérieure ou égale à 1000 W.

12. La tronçonneuse selon la revendication 1, dans laquelle une vitesse de chaîne de la tronçonneuse est supérieure ou égale à 10 m/s.

13. La tronçonneuse selon la revendication 1, dans laquelle une densité de puissance du moteur est supérieure à 1000 W/kg.

14. La tronçonneuse selon la revendication 1, dans laquelle un diamètre extérieur du moteur est supérieur ou égal à 50 mm.

15. La tronçonneuse selon la revendication 1, dans lequel le moteur comprend un stator (210) et un rotor (220) qui tourne par rapport au stator, dans lequel un élément de support (250) comprenant une portion de jante et une portion de rayon est disposé à un centre radial du stator.
